# EUROPEAN PATENT APPLICATION

(11) **EP 2 544 133 A1**
(43) Date of publication of application: **09.01.2013**
(21) Application number: 12175433.7
(22) Date of filing: 06.07.2012
(51) Int. Cl.: G06Q 10/02, G06Q 30/02

(54) **Offer based restaurant reservations**

(30) Priority: 08.07.2011 US 201113179348
(71) Applicant: Opentable Inc., San Francisco, CA 94103 (US)
(72) Inventor: McCullough, Charlie, Oakland, CA 94618 (US); Teoh, Elaine, San Francisco, CA 94110 (US); Valdivia, Edgard, San Francisco, CA 94115 (US)
(74) Representative: Freeman, Jacqueline Carol

(57) **Abstract**

A system for offer based restaurant reservations comprises a processor and a memory. The processor is configured to: receive a request for a reservation including a set of attributes such as a date or date range, a time range, a location, a cuisine, and a party size; determine a set of available reservations based on an actual table availability for the date, time, and the party size; determine one or more offers based on the date, time, and the party size; determine an overlapping subset between the set of available reservations and the one or more offers; and provide an indication of the overlapping subset. The memory is coupled to the processor and is configured to provide the processor with instructions.

## Description

### BACKGROUND OF THE INVENTION

Restaurants typically offer promotions that generally improve the desirability for a customer to patronize a given business. For example, happy hour promotions or coupons for a free entrée. However, the restaurant has limited control over the number of customers that arrive or when they arrive in response to these promotions.

### BRIEF DESCRIPTION OF THE DRAWINGS

Various embodiments of the invention are disclosed in the following detailed description and the accompanying drawings.

Figure 1 is a block diagram illustrating an embodiment of a system for offer based restaurant reservations.

Figure 2 is a block diagram illustrating an embodiment of a service provider system.

Figure 3A is a flow diagram illustrating an embodiment of a process for offer based restaurant reservations.

Figure 3B is a flow diagram illustrating an embodiment of a flow for offer based restaurant reservations.

Figure 4 is a diagram illustrating an embodiment of a user interface display.

Figure 5 is a diagram illustrating an embodiment of a user interface display.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A system for offer based restaurant reservations is disclosed. The system comprises a processor and a memory. The processor is configured to: receive a request for a reservation including a set of attributes such as a date or date range, a time range, a location, a cuisine, and a party size; determine a set of available reservations based on an actual table availability for the date, time, and the party size; determine one or more offers based on the date, time, and the party size; determine an overlapping subset between the set of available reservations and the one or more offers; and provide an indication of the overlapping subset. The memory is coupled to the processor and is configured to provide the processor with instructions.

A system for offer based restaurant reservations comprises a processor and a memory. The processor configured to generate a plurality of available tables using availability rules, filter the plurality of available tables to determine a set of pertinent available tables, generate a plurality of offers using offer rules, filter the plurality of offers to determine a set of pertinent offers, determine an overlapping subset between the set of pertinent available tables and the set of pertinent offers, and in the event that a trigger event occurs, provide an offer to a user from the overlapping subset. The memory is coupled to the processor and is configured to provide the processor with instructions.

In some embodiments, the process for determining a response to a search for reservations comprises determining availability of tables and availability of offers. Availability of tables is determined by using availability rules to generate availability and then filtering the availability to find the pertinent availability. Availability of offers is determined by using offer rules to generate all offers and then filtering the offers to find the pertinent offers. The pertinent availability of tables and the pertinent offers are searched to see which restaurants/tables occurred in both sets (pertinent availability of tables and pertinent offers). In some embodiments, after finding the restaurants/tables are identified occurring in both sets, the restaurant/tables are subject to yield management/revenue optimization rules before presenting the result to a customer.

In some embodiments, the system provides search results to a user such as a particular offer type. For example, "all 50% off deals in SF" are searched for in the system and presented to the user.

In some embodiments, a restaurant is able to make offers that are specific to available tables at the restaurant at a specific time. The restaurant is thereby able to control the number and arrival rate of the customers that receive promotional offers in order to target the promotions to fill their tables but not overfill the restaurant. In some embodiments, the system calculates all available possible combinations of available tables and offers promotions to reduce available tables. The system dynamically removes combinations as tables are reserved. In some embodiments, the system automatically generates offers based on a rule set for available tables. For example, a restaurant offers 50% off for the first $20 of a check for tables available 2 days from today but only on Monday through Thursday between 5 PM and 6:30 PM. In some embodiments, the system makes offers that are dynamically updated based on table availability. In various embodiments, the offers (e.g., percentage off or dollars off) are made considering customer arrival rate, available tables, restaurant capacity, revenue optimization, customer retention, party size, date, time of the day, day of the week, special events, theater days, holidays, percentage booked, total number of offers per day, total offers per shift, total accepted offers per day, total accepted offers per shift, up to a certain number of offers over a period, or any other appropriate consideration. In some embodiments, the offers are offered for a requested time in the event that the requested time is available.

In various embodiments, restaurant table availability is based on 1) allocation models or allotment, where the restaurant indicates the number of tables, covers, or parties that are available for a shift or a rate of arrival, 2) slot model, where the restaurant indicates the party sizes and exact times that there are available, 3) inventory where the restaurant indicates the specific tables and times that are available and the system determines specific party sizes and times, or any other appropriate manner of determining table or reservation availability.

In some embodiments, a reservation and an offer are only offered in combination and are rolled back if the reservation is not completed or canceled. In some embodiments, the offer is made as a paperless (e.g., offered via a network, on a cell phone, on a computer accessing a web service). In some embodiments, the offer is made as a discrete transaction that is made between a customer searching for a reservation and a service that provides reservations as a service. The offer and availability is tailored for a discrete transaction between a user and a service where the transaction can be accepted or if not accepted, withdrawn.

In various embodiments, offers are based on any of: revenue, covers, parties,- all of these computed from current trend data and/or historical data with varying granularities (e.g., day, week, month, year, same day of prior week, same week of prior year, etc.), or any other appropriate basis for making offers.

In some embodiments, the system for making offers is accessed or integrated with a 3^{rd} party system via an application programming interface (API). For example, the system is used with a discount service (e.g., a service that distributes a discount via email - for example, Groupon^{™}, a service that offers a discount via the web - for example, livingsocial, etc.), where an offer is coupled directly with a table available at a restaurant.

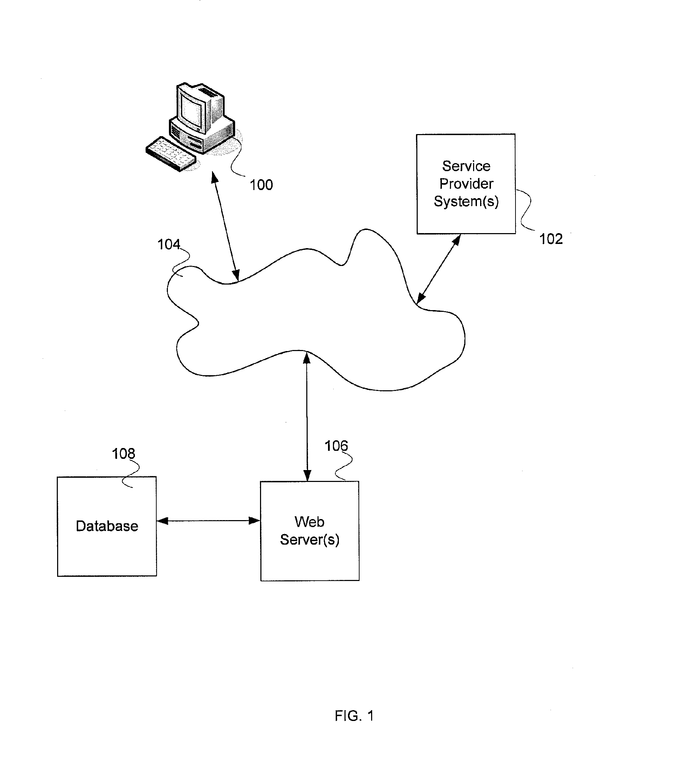

Figure 1 is a block diagram illustrating an embodiment of a system for offer based restaurant reservations. In the example shown, user 100 communicates via network 104 with web server(s) 106. User 100 requests availability of a restaurant reservation. Web server(s) 106 provide information regarding available restaurant reservation (e.g., search results, reviews, time availability, menus, seating chart, table layouts, special services, etc.) and/or available offers (e.g., based on party size, time, date, restaurant type, etc.). Web server(s) 106 communicate directly or via network 104 with service provider system(s) 102. Web server(s) 106 communicate reservation availability information, reservation confirmation information, offer availability, offer confirmation, menu information, seating chart and/or table layout information, etc. with service provider system(s) 102 (e.g., restaurant(s)). Web server(s) 106 communicate with database 108. Database 108 stores service provider information (e.g., reservations, menus, table configurations, customer profiles, etc.). In various embodiments, a network coupled to the processor to a publicly accessible web site via the Internet provides functionality of one or more of the following: functionality to transmit availability of reservations and/or offers, functionality to transmit requests from the web site, functionality to transmit returned reservation and/or offer acceptance information, or any other appropriate functionality. In various embodiments, a graphical user interface associated with web server(s) 106 or service provider system(s) 102 is coupled to the processor for one or more of the following: to receive and return reservation requests, to receive and return offers, to provide reservation availability, to provide reservation confirmation information, to receive offer rules, to automatically generate offers, and/or for any other appropriate functionality.
In some embodiments, the functions of specifying, configuring or changing offers and associated limits and triggering conditions are done through a separate system or by an equivalent of service provider system 102. In various embodiments, the offer setup and rule input is performed using a business to business application or at a web server or in other appropriate manner.

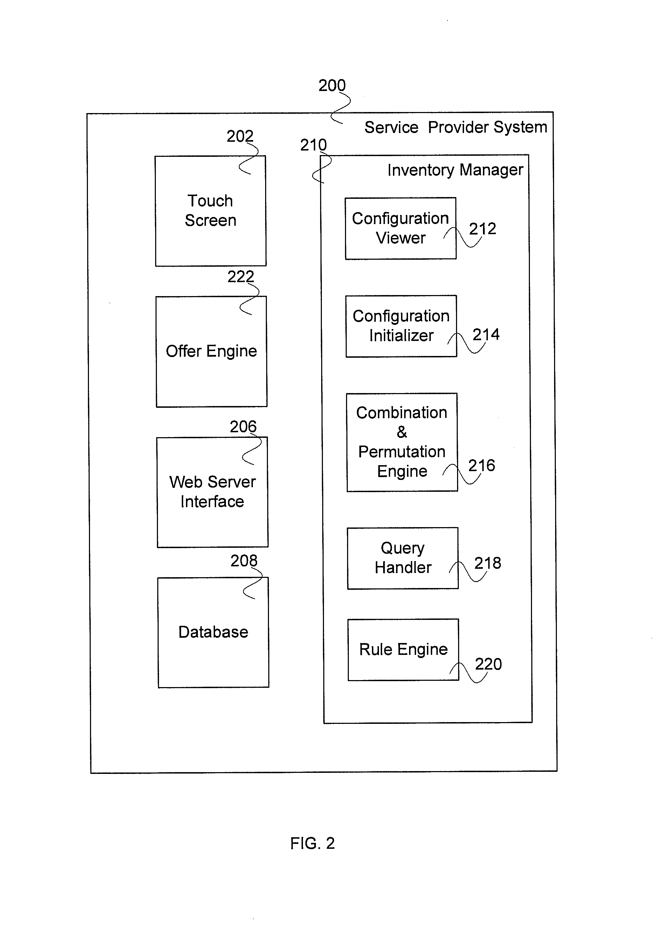

Figure 2 is a block diagram illustrating an embodiment of a service provider system. In some embodiments, service provider system 200 of Figure 2 is used to implement one system of service provider system(s) 102 of Figure 1. In the example shown, service provider system 200 comprises touch screen 202, web server interface 206, database 208, and inventory manager 210. Touch screen 202 is used to interface to service provider system 200. For example, a restaurant manager interfaces with service provider system 200 using touch screen 202 to navigate, enter commands and parameters, or any other appropriate interaction with the service provider system. Web server interface 206 interfaces system provider system 200 and a web server. Web server interface 206 is used to communicate reservation information, confirmation information, configuration information, menu information, or any other appropriate information. Database 208 stores service provider information. Service provider information includes reservation information, confirmation information, menu information, configuration information, etc.

Inventory manager 210 comprises configuration viewer 212, configuration initialize 214, combination & permutation engine 206, query handler 218, and rule engine 220. Inventory manager 210 enables more efficient use of restaurant inventory by offering availability of all possible combinations and/or permutations of restaurant reservations. Then upon receipt of a new reservation, the list of possible combination and/or permutations is updated to remove combinations and/or permutations that are eliminated by the new reservation. For example, combinations and/or permutations that is/are not possible because the new reservation conflicts with them, i.e., use the same table within the same time period or likely time period based on historical average time used for reservations of this party size or by this diner, etc. Configuration viewer 212 enables a service provider employee to view the restaurant configuration. The configuration information includes table configuration for restaurant (e.g., location of table, combination possibilities, number of seats, etc.). Configuration initializer 214 is used to initialize the configuration for the restaurant. Combination & permutation engine 216 is used to determine the possible combinations and/or permutations of reservations available for a restaurant given the configuration of the restaurant and the existing reservations. Query handler 218 is used to handle queries regarding table availability. For example, a query is made regarding the available reservations that include all possible permutations and combinations of available times and available table configurations for a given restaurant. Rule engine 220 is used to determine a selection of a reservation/table/time slot based on a rule. Rule engine 220 is able to automatically select a reservation for a table/time slot. Offer engine 222 is used to determine available offers for a restaurant given a date, a time, a table size, either based on specific offers set by a specified desired offer list or by an automated offer generation engine that determines offers based on a rule set that is dependent on factors (e.g., customer arrival rate, percentage booked, date, day of the week, restaurant capacity, revenue optimization, customer retention, resource optimization, time, time slot, day of the month, holiday, local event, days to reservation, etc.).

In some embodiments, the selection of the reservation (e.g., the specific table at the restaurant) is based on a rule enabling automatic selection. In various embodiments, the rule for selecting a reservation comprises maximizing table availability (e.g., a best fit followed by a selection of maximizing table availability), minimizing wait time, balancing load to wait staff, utilizing tables in a specific order (e.g., near windows first, back of the restaurant last, or any other appropriate rule. In various embodiments, the selection of the reservation is determined based at least in part on one or more of the following: maximizing revenue (e.g., maximizing revenue can cause more/longer wait times), maximizing customer satisfaction (e.g., maximizing customer satisfaction can underutilize the restaurant), a historical turn time (e.g., used in the prediction of a table availability), a received turn time (e.g., from a maitre d') a historical restaurant reservation information (e.g., used in the prediction of customer arrivals or customer flow), a historical customer search information (e.g., used in the prediction of customer demand and potential flow for tables in the restaurant; where historical can mean that the rule is based on the previous day, the same day of the previous week, month, or year, or any other meaningful earlier period such as a holiday period), a maximum arrival rate for customers at a restaurant (e.g., where the maximum arrival rate is based on an individual arrival rate, a party arrival rate, a large party arrival rate, etc. and a time segment for example 15 minute interval or entire shift length), or any other appropriate information to aid selection of a reservation.

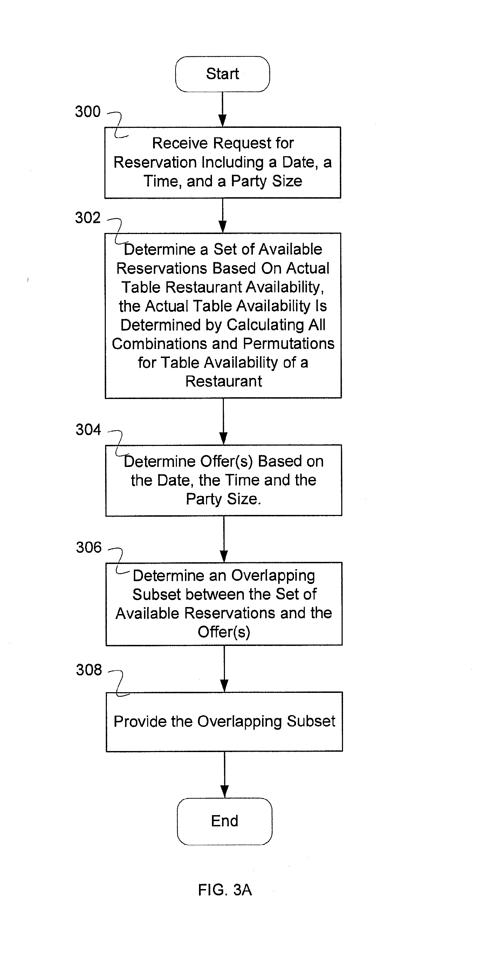

Figure 3A is a flow diagram illustrating an embodiment of a process for offer based restaurant reservations. In the example shown, in 300 a request is received for a reservation including a date, a time, and a party size. In 302, a set of available reservations is determined based on actual table restaurant availability. The actual table availability is determined by calculating combinations and permutations for table availability of a restaurant. For example, restaurants have tables that can seat patrons. Tables can be combined or rearranged. This ability to combine or rearrange or separate tables means that there are multiple possible configurations and multiple possible available reservations. These can be made available and then in the event that some reservations are filled, a new availability is determined. In various embodiments, actual table availability is determined in real time, where the determination of availability uses a combination and/or permutation calculation based at least in part on up to date reservation information, usage information, configuration information, or any other appropriate information. In various embodiments, actual table availability is based on one or more of the following: a daily maximum cover, a number of seated covers, a diner's location, a diner's proximity to a restaurant, a diner's history of restaurant use, an arrival rate limit, a user behavior, a user geographic location, a user spending history, a visit history, a time spent on a page, a page viewing history, a dining history, a preferred cuisine, a dining location or any other appropriate criteria. In 304, offer(s) is/are determined based on the date, the time, and the party size. Offer(s) are made in order to increase use of the restaurant's available tables. In some embodiments, the one or more offers is/are determined in real time. For example, the offers are determined based at least in part on a start date for an offer, a stop date for an offer, offer days (e.g., Thursdays, Monday-Wednesday, etc.), offer hours (e.g., 11:00 AM - 3:00 PM, 4:30 PM - 6:00 PM, etc.), daily maximum covers, a number of seated covers, a cap for number of offers, a number of offers, an amount of offer (e.g., dollars off, percentage off, percent meal discount, percent beverage discount, buy one get one free, complimentary item, free corkage, prix fixe meal, etc.), an arrival rate limit (e.g., so many per hour, per 15 minutes, etc.), etc. In another example, offers of 10% off are setup between January 10, 2011 and January 20, 2011 for Tuesdays through Thursdays for the hours of 3:00 PM to 4:00 PM but with not more than 2 offers per each 15 minute period. In various embodiments, the one or more offers is based at least in part on a minimum party size and/or a maximum party size. In 306, an overlap subset is determined between the set of available reservations and the offer(s). The overlapping subset includes one or more reservations each with an associated offer for the date and the party size. The overlapping subset includes one or more reservations each with an associated offer for times around the time. In 308, the overlapping subset is provided.

In some embodiments, offers are triggered based on user behavior - for example, a trigger event is triggered based on a time spent on page, a page viewing history, a dining history, preferred cuisines, dining locations, a diner's location, a diner's proximity to a restaurant, an availability of an offer, a diner's history of restaurant use, etc.; In some embodiments, offers are triggered based on a user geographic location; In some embodiments, offers are triggered based on revenue or resource optimization - for example, maximizing utilization of staff or maximizing utilization of an area of the restaurant; In some embodiments, offers are triggered by a diners' spending history or by a visit history at a particular restaurant (e.g., generating an offer to a previously frequent diner who hasn't been in lately).

In some embodiments, offers are made based on prespecified conditions and/or prespecified rules. For examples, an offer is only available to diners who are located within 1 mile of the restaurant at the time that they book the reservation; an offer is generated for 'section 1' of the restaurant until it is 90% utilized; an offer is generated for 30% off offers only to VIPs; etc. In various embodiments, the prespecified conditions and/or prespecified rules comprise one or more of the following: a diner satisfies a condition that had been set up by the customer of a restaurant (e.g., customer system user) or by a restaurant user (e.g., a restaurant owner) to provide incentive or triggers to finding offers, a diner is within x feet or y miles of the restaurant, a diner is a recurring diner, a diner has flagged explicitly a restaurant as a restaurant of interest, a diner has not dined at a restaurant in over x days, a diner has not used the reservation service in over x days, or any other appropriate condition and/or rule. In some embodiments, prespecified conditions and/or the prespecified rules are determined during a setup time by a restauranteur; the system generates, modifies, or discontinues offers in real time based on the rules and/or the prespecified conditions

In some embodiments, the offers change in a graded way, a stepwise fashion, or a linear fashion over time. For example, a discount percentage changes from 10% to 20% to 30% as the date for the available inventory in a restaurant approaches. For example, 3 days before a $10 off discount is offered, 2 days before a $20 off discount is offered, and 1 day before a $30 discount is offered or vice versa.

In some embodiments, an automated system is developed to make offers based at least in part on a rule set. For example, for inventory levels where table occupancy is less than 30% full, make offers until the table occupancy is 70% full. The offers gradually increase as the day of the reservations nears. In some embodiments, an automated offer start is based at least in part on a percentage full of a restaurant. In some embodiments, an automated offer end is based at least in part on a percentage full of a restaurant. In some embodiments, the set of rules indicates a series of steps of different offers: 5%, 10%, 15%, and 20% reduction. In some embodiments, the set of rules indicates a series of different types of offers: discount on beverage, discount on entrée, free entrée, etc. In some embodiments, an automated offer is based at least in part on preferred seating (e.g., a patio location, a view location, etc.).

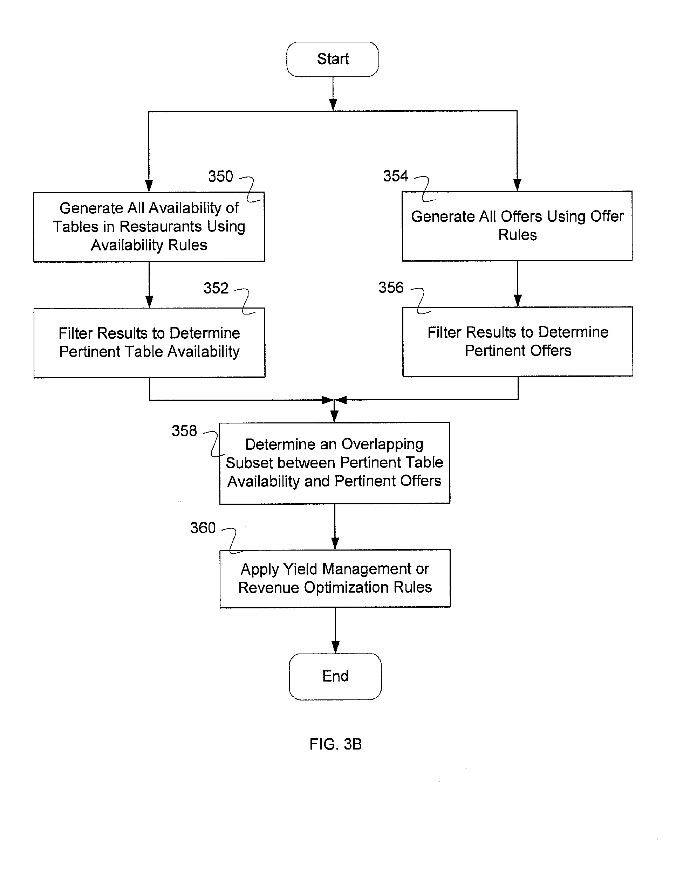

Figure 3B is a flow diagram illustrating an embodiment of a flow for offer based restaurant reservations. In the example shown, in 350 all availability of tables in restaurants is generated using availability rules. For examples, 1) slot availability - dates, times and sizes are prespecified by the restaurant and are not directly related to actual tables; 2) allotment/allocation availability - the restaurant specifies a maximum number of diners or reservations that can be sold for a shift; also not directly related to the tables, for example - sell 30 covers over the course of the dinner shift which is from 5pm to 10pm; and 3) inventory availability - the restaurant describes the floor plan of the restaurant, including all tables and the party size range of each table such as tables 1 to 5 can each seat 2 to 6 covers; the restaurant also defines any tables that can be combined, and optionally specifies a fill order preference (example: seat diners at tables 10-12 first because they are at the window); the system automatically generates and shows all possible dates, times and party sizes based on these rules, and automatically updates the availability when reservations are made. In various embodiments, availability rules comprise one or more of the following: a rule that determines availability based at least in part on information from a restaurant indicating exact, approximate, or estimated table availability, a rule determining availability according to using all possible combinations and permutations of tables given possible arrangements and rearrangements of tables in a given restaurant, a rule determining availability according to using an allotment of tables, covers, or parties available for a shift or a rate of arrival, a rule determining availability according to using a slot model that indicates the party sizes and exact times that are available, a rule determining availability according to using inventory where the restaurant indicates exact tables and times that are available, or any other appropriate rule(s).

In 352, the availability of tables is filtered to determine pertinent table availability. For example, a database of available restaurant tables is searched for tables that satisfy availability criteria (e.g., in an area, with a type of cuisine, in a time range, in a date range, for a party size, etc.). For example, the availability of tables is filtered to optimize resources or to optimize revenue. In some embodiments, restaurant optimizes the use of section 2 as section 1 is temporarily closed.

In 354, all offers are generated using offer rules. For example: generate 2 for 1 drinks any Sunday through Thursday when the restaurant is going to be below 70% capacity, and stop generating these offers when the restaurant reaches 90%. Another example: the restaurant has sold out a room to a large party for a 4 hour period; the rule would be to generate a 30% off entire bill offer for the remaining 4 hours in the 8 hour shift to maximize the use of the kitchen/wait staff resources. In various embodiments, offer rules comprise one or more of the following: a rule that determines offer availability based at least in part on a date, a time, and a party size, a rule that determines real time offer availability of an offer so that offers cannot be oversubscribed as once the offer(s) are no longer desired, the offers are not made available, a rule that determines offer availability based at least in part on a campaign limit (e.g., a fixed cap that spans the duration of a campaign, which once depleted for the campaign then the offer is no longer available), on a daily limit (e.g., a fixed cap per day), on a slot based limit (e.g., a limit for a particular time), a rule that determines availability based at least in part on availability limits used in combination with each other, a rule that determines availability based at least in part on blackout dates or times or a blackout rule when offers are not available (e.g., peak times, holidays, theater times, etc.), a rule that determines availability based at least in part on pacing (e.g., a control that prevents the rate of offer consumption to exceed a threshold), or any other appropriate offer rule.

In 356, offers are filtered to determine pertinent offers. For example, offers are filtered to identify offers meeting search criteria (e.g., offers are within a desired time range, date range, cuisine type, location, neighborhood, discount range, discount type, party size, etc.). For example, a number of offers are determined in order to meet resource optimization goals (e.g., use of a room, use of wait staff, use of kitchen, use of food inventory, etc.).

In 358, an overlapping subset is determined between pertinent table availability and pertinent offers. In 360, yield management or revenue optimization rules are applied. For example, offers are made by applying rules that are designed to improve a restaurant's business. For example: the restaurant has sold out a room to a large party for a 4 hour period; the rule would be to generate a 30% off entire bill offer for the remaining 4 hours in the 8 hour shift to maximize the use of the kitchen/wait staff resources. Another example: generate free corkage offers only to restaurant VIPs who are known to be big spenders (based on their reservation & spending history). Another example: the restaurateur bought a large amount of beef; offer a 30% discount on all beef dishes. In some embodiments, offers are dynamically enabled or disabled based on a restaurant's business metrics (e.g., the current covers, reservations, and revenue accrued for the day, week, month, year vs. set thresholds or a deviation in the covers, reservations, and revenue vs. historical trends). In some embodiments, a short fall in one of these metrics trigger: (a) the enabling of an offer, (b) an increase in the number of offers being offered, (c) a change in the discount being offered, (d) an adjustment to the price of the offer. In some embodiments, the optimization rules feedback into the offers engine.

In some embodiments, offer is removed based on a rule set (e.g., if offer is not sold within x days of a start offer date, offer is automatically removed).

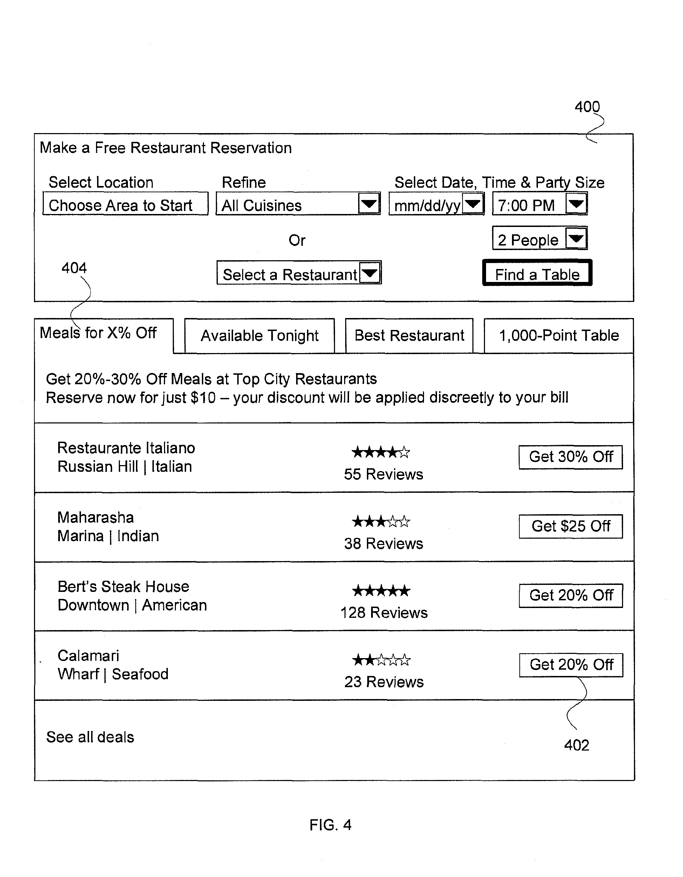

Figure 4 is a diagram illustrating an embodiment of a user interface display. In the example shown, in 400 a user can input fields regarding a location, a type of cuisine or a specific restaurant, a date, a time, and a party size. The user can then also indicate to find a table. In 404, a tab display shows meals for x% off. In some embodiments, the tab display is populated after the indication is selected. The tab display shows 20%-30% off meals at top city restaurants, which can be reserved at for $10. The discount can be applied discreetly to your bill. For example, Restaurant Italiano, located in Russian Hill and an Italian style restaurant, had 55 reviews and 4 stars for a rating, where 30% off can be received as a discount. Similarly, a $25 and 20% discounts can be received for Maharasha, Bert's Steak House, and Calamari restaurants. The discounts or promotions can be selected by pushing button 402.

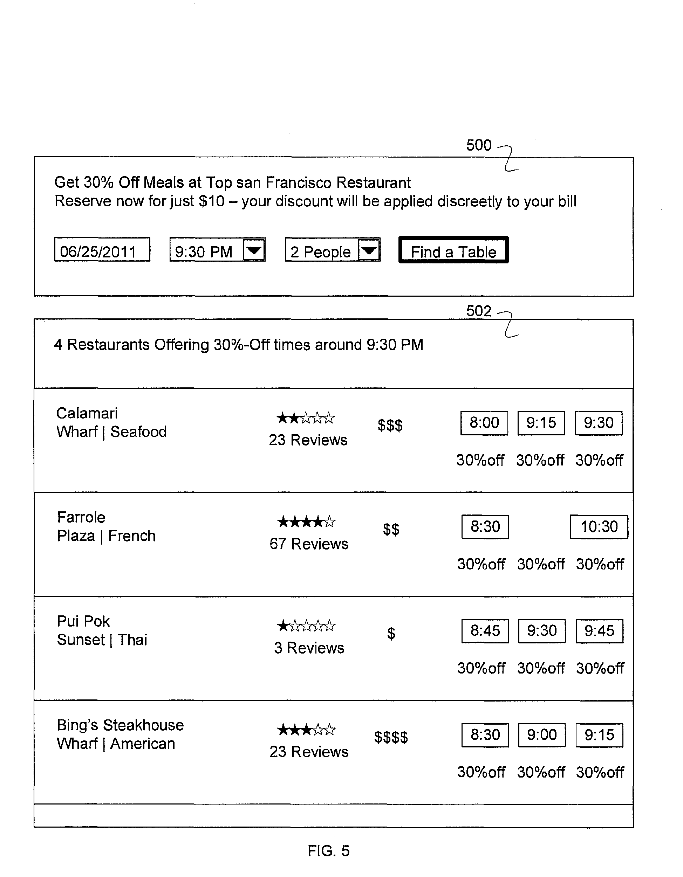

Figure 5 is a diagram illustrating an embodiment of a user interface display. In the example shown, in 500 a user can input fields regarding a date, a time, and a party size. For example, a user requests to locate a table for 6/25/2011 at 9:30 PM for 2 people. The user can then also indicate to find a table. In 502, the display shows 4 restaurants offering 30%-off times around 9:30. Calamari restaurant has 30%-off offers available at 8:00, 9:15, and 9:30. Farrole restaurant has 30%-off offers available at 8:30 and 10:30. Pui Pok has 30%-off offers available at 8:45, 9:30, and 9:45. Bing's Steak House has 30%-off offers available at 8:30, 9:00, and 9:15.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A system for offer based restaurant reservations, comprising:
a processor configured to:
determine a set of available reservations based on an actual table availability for a date, a time, and a party size, wherein the actual table availability is determined by calculating combinations and permutations for table availability of a restaurant;
determine one or more offers based on the date, the time, and the party size;
determine an overlapping subset between the set of available reservations and the one or more offers; and
a memory coupled to the processor and configured to provide the processor with instructions.

2. A system according to claim 1, wherein the processor is configured to search the set of available reservation in a database to determine a set of pertinent table availability; and determine an overlapping subset between the set of pertinent table availability and the one or more offers.

3. A system as in claim 1, wherein combinations and permutations include possible table combinations or separations or other arrangements possible for a restaurant.

4. A system as in claim 1, wherein the actual table availability or the one or more offers are determined in real time.

5. A system as in claim 4, wherein the determination of availability uses a combination and/or permutation calculation based at least in part on one or more of the following: up to date reservation information, usage information, and configuration information.

6. A system as in claim 1, wherein the one or more offers are based at least in part on one or more of the following: a start date for an offer, a stop date for an offer, an offer day, an offer hour.

7. A system as in claim 1, wherein the one or more offers are based at least in part on one or more of the following: a daily maximum cover, a number of seated covers, a cap for number of offers, a number of offers, an amount of offer, a diner's location, a diner's proximity to a restaurant, an availability of an offer, a diner's history of restaurant use, or an arrival rate limit, or a minimum party size or a maximum party size.

8. A system as in claim 1, wherein actual table availability is based on one or more of the following: a daily maximum cover, a number of seated covers a diner's location, a diner's proximity to a restaurant, a diner's history of restaurant use, or an arrival rate limit, a user behavior, a user geographic location, a user spending history, a visit history, a time spent on a page, a page viewing history, a dining history, a preferred cuisine, and a dining location.

9. A system as in claim 1, wherein the overlapping subset includes one or more reservations each with an associated offer for the date and the party size, or includes one or more reservations each with an associated offer for times around the time.

10. A system as in claim 1, wherein the one or more offers change in one or more of the following: a graded way, a stepwise fashion, or a linear fashion.

11. A system as in claim 1, wherein the one or more offers are made automatically based at least in part on a rule set.

12. A system as in claim 11, wherein an automated offer start or end is based at least in part on triggering events or prespecified conditions.

13. A system as in claim 12, wherein the trigger event is triggered based on one or more of the following: a user behavior, a user geographic location, a user spending history, a visit history, a time spent on a page, a page viewing history, a dining history, a preferred cuisine, and a dining location.

14. A system as in claim 11, wherein an automated offer start or end is based at least in part on a percentage full of a restaurant, or on revenue optimization, or on resource optimization.

15. A method for offer based restaurant reservations, comprising:
determining a set of available reservations based on an actual table availability for a date, a time, and a party size, wherein the actual table availability is determined by calculating combinations and permutations for table availability of a restaurant;
determining one or more offers based on the date, the time, and the party size; and
determining an overlapping subset between the set of available reservations and the one or more offers.

16. A computer program product for offer based restaurant reservations, the computer program product being embodied in a computer readable storage medium and comprising computer instructions for:
determining a set of available reservations based on an actual table availability for a date, a time, and a party size, wherein the actual table availability is determined by calculating combinations and permutations for table availability of a restaurant;
determining one or more offers based on the date, the time, and the party size; and
determining an overlapping subset between the set of available reservations and the one or more offers.

17. A system as in claim 15, wherein generating the plurality of available tables includes searching all possible permutations and combinations of table availability at plurality of restaurants, or includes searching allocations or allotments of a plurality of restaurants, or includes searching table availabilities each associated with a time slot in a plurality of restaurants.

18. A system as in claim 15, wherein the trigger event is triggered based at least in part on revenue optimization, or resource optimization, or a user behavior, or a user geographic location, or a user spending history, or a visit history, or a time spent on a page, or a page viewing history, or a dining history, or a preferred cuisine, or a dining location.

19. A system for offer based restaurant reservations, comprising:
a processor configured to:
generate a plurality of available tables using availability rules;
filter the plurality of available tables to determine a set of pertinent available tables;
generate a plurality of offers using offer rules;
filter the plurality of offers to determine a set of pertinent offers;
determine an overlapping subset between the set of pertinent available tables and the set of pertinent offers;
in the event that a trigger event occurs, provide an offer to a user from the overlapping subset; and
a memory coupled to the processor and configured to provide the processor with instructions.

20. A method for offer based restaurant reservations, comprising:
generating a plurality of available tables using availability rules;
filtering the plurality of available tables to determine a set of pertinent available tables;
generating a plurality of offers using offer rules;
filtering the plurality of offers to determine a set of pertinent offers;
determining an overlapping subset between the set of pertinent available tables and the set of pertinent offers;
in the event that a trigger event occurs, providing an offer to a user from the overlapping subset.

21. A computer program product for offer based restaurant reservations, the computer program product being embodied in a computer readable storage medium and comprising computer instructions for:
generating a plurality of available tables using availability rules;
filtering the plurality of available tables to determine a set of pertinent available tables;
generating a plurality of offers using offer rules;
filtering the plurality of offers to determine a set of pertinent offers;
determining an overlapping subset between the set of pertinent available tables and the set of pertinent offers;
in the event that a trigger event occurs, providing an offer to a user from the overlapping subset.
